Europäisches Patentamt

European Patent Office

Office européen des brevets

(19)

(11) Veröffentlichungsnummer : **0 069 255
B1**

(12) **EUROPÄISCHE PATENTSCHRIFT**

(45) Veröffentlichungstag der Patentschrift :
28.11.84

(21) Anmeldenummer : 82105267.7

(22) Anmeldetag : 16.06.82

(51) Int. Cl.³ : **B 01 D 11/04**

(54) **Mehrstufige Kolonne zur Gegenstromextraktion von Flüssigkeiten.**

(30) Priorität : 06.07.81 DE 3126598

(43) Veröffentlichungstag der Anmeldung :
12.01.83 Patentblatt 83/02

(45) Bekanntmachung des Hinweises auf die Patenterteilung : 28.11.84 Patentblatt 84/48

(84) Benannte Vertragsstaaten :
BE CH DE FR GB LI NL

(56) Entgegenhaltungen :
DD-A-    68 894
GB-A- 1 348 863
US-A- 2 091 645

(73) Patentinhaber : HOECHST AKTIENGESELLSCHAFT
Postfach 80 03 20
D-6230 Frankfurt am Main 80 (DE)

(72) Erfinder : Gradl, Reinhard, Dr.
Am grünen Weg 6
D-5030 Hürth (DE)
Erfinder : Schimmel, Günther, Dr.
Am Beissel 27
D-5042 Erftstadt (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine mehrstufige Kolonne zur Gegenstromextraktion von zwei spezifisch verschieden schweren Flüssigkeiten mit einem vertikal stehenden Gehäuse, welches einen oberen Einlauf und einen unteren Auslauf für die spezifisch schwerere Flüssigkeit sowie einen unteren Einlauf und einen oberen Ablauf für die spezifisch leichtere Flüssigkeit aufweist, wobei mittig im Gehäuse eine vertikal verlaufende Welle mit daran senkrecht mit Abstand voneinander befestigten Rührorganen angeordnet ist, und wobei sich im Bereich der Innenwand des Gehäuses mit Abstand übereinander mehrere kreisringförmige Statorscheiben befinden und wobei die Rührorgane je eine über ihren gesamten Durchmesser durchgehende Scheibe umfassen.

Aus der DE-C-1 255 633 ist eine Kolonneneinrichtung zur Gegenstromextraktion zweier spezifisch verschieden schwerer Flüssigkeiten bekannt, welche aus einem vertikal stehenden, zylindrischen Gehäuse besteht, das oben und unten mit je zwei Zuführungen bzw. Ableitungen für die beiden Flüssigkeiten versehen ist. Mittig im Gehäuse befindet sich eine vertikal verlaufende Antriebswelle, an welcher senkrecht eine Reihe von Rührorganen übereinander angeordnet sind, wobei sich die Rührorgane zwischen kreisringförmigen Leitwänden befinden. Zwischen den Rührorganen sind horizontale, in ihrem zentralen Teil perforierte Trennwände angeordnet, durch welche das Gehäuse in Kolonnenstufen unterteilt wird.

Weiterhin ist ein Drehscheibenextraktor (« Rotary-disk Contactor ») bekannt, welcher in einem horizontal stehenden Gehäuse mit Zuläufen und Abläufen für die schwere bzw. die leichte Flüssigkeit eine mittig verlaufende, vertikal angeordnete Welle aufweist. An der Welle sind mit Abstand voneinander und senkrecht zu ihr mehrere Rotorscheiben angebracht, während an der Innenwand des Gehäuses mit Abstand voneinander und senkrecht an ihr mehrere Statorringe befestigt sind. Dabei ist zwischen den Rotorscheiben und den Statorringen ein kreisringförmiger Abstand freigelassen (vergleiche R. H. PERRY : « Chemical Engineers' Handbook », 5. Auflage, 1973, Seite 21-24).

Beim Betrieb einer Extraktionskolonne wird die Trägerphase, welche den zu extrahierenden Stoff enthält, entweder als spezifisch schwerere Flüssigkeit am oberen Ende oder als spezifisch leichtere Flüssigkeit am unteren Ende eingeführt, während das Extraktionsmittel im Gegenstrom dazu aufgegeben wird. Durch die über die rotierenden Rührorgane zugeführte Energie erfolgt die Dispergierung der Trägerphase im Extraktionsmittel oder umgekehrt.

Im Gleichgewichtszustand stellt sich in der im Betrieb befindlichen Extraktionskolonne ein axiales Konzentrationsprofil des zu extrahierenden Stoffes in der Trägerphase und im Extraktionsmittel ein, wobei im Idealfall die Konzentration des zu extrahierenden Stoffes in der Trägerphase von ihrer Eintrittsstelle ausgehend abnimmt, bis an der Austrittsstelle der Trägerphase die Konzentration des zu extrahierenden Stoffes praktisch null beträgt, während umgekehrt die Konzentration des zu extrahierenden Stoffes im Extraktionsmittel von null auf einen Maximalwert zunimmt.

Nachteilig ist bei den bekannten Extraktionskolonnen, daß bei ihrem Stillstand (diskontinuierlicher Betrieb oder Störfall) zunächst eine Entmischung der beiden flüssigen Phasen erfolgt, wobei die leichte Phase nach oben steigt und die schwere Phase sich im unteren Kolonnenteil sammelt. Darüberhinaus wird das dem Gleichgewichtszustand entsprechende Konzentrationsprofil zerstört, indem die Konzentration des zu extrahierenden Stoffes in jeder Phase durch Diffusion auch in axialer Richtung konstant wird und der Unterschied in der Konzentration des zu extrahierenden Stoffes zwischen den beiden Phasen nur noch durch den Verteilungskoeffizienten bestimmt wird.

Dadurch werden bei Wiederinbetriebnahme der bekannten Extraktionskolonnen große Mengen des zu extrahierenden Stoffes mit der Trägerphase ausgetragen, wa je nach dem Prozeß zu starken Verunreinigungen der Extraktphase oder zu erheblichen Verlusten führt.

Es ist daher Aufgabe der vorliegenden Erfindung, eine aus einem zylindrischen Gehäuse mit Einläufen und Ausläufen für Flüssigkeiten unterschiedlichen spezifischen Gewichtes bestehende Extraktionskolonne anzugeben, wobei mittig im Gehäuse eine vertikal verlaufende Welle mit daran senkrecht mit Abstand voneinander befestigten Rührorganen angeordnet ist, in welcher beim Stillstand der Welle die Entmischung der Trägerphase und des Extraktionsmittels nur in begrenzten Bereichen erfolgt und der etwa dem Gleichgewichtszustand entsprechende Konzentrationsgradient des zu extrahierenden Stoffes in Axialrichtung der Kolonne erhalten bleibt. Das wird erfindungsgemäß dadurch erreicht, daß die Rührorgane und/oder die Statorscheiben um einen Abstand L relativ zueinander vertikal verschiebbar angeordnet sind ; und daß zwischen jeder Scheibe und jeder Statorscheibe mindestens eine umlaufende Abdichteinrichtung vorgesehen ist.

Die Kolonne gemäß der Erfindung kann weiterhin wahlweise auch noch dadurch weitergebildet sein, daß

a) die Statorscheiben an der Innenwand des Gehäuses befestigt sind und daß ein Hubzylinder vorgesehen ist, durch welchen die die Rührorgane tragende Welle senkbar bzw. hebbar ist,

b) die die Rührorgane tragende Welle starr angeordnet ist und daß die Statorscheiben tragende Zuganker an Hubzylindern aufgehängt sind, durch welche die Statorscheiben senkbar bzw. hebbar sind,

c) im Bereich zwischen den Statorscheiben Distanzhalter über die Zuganker übergezogen sind,

d) die Scheiben nach außen gerichtete und die Statorscheiben nach innen gerichtete Verlängerungen aus elastischem Material aufweisen,

e) die Statorscheiben an ihrer Oberseite oder Unterseite je einen O-Ring aufweisen,

f) auf der Oberseite oder Unterseite jeder Statorscheibe ein Faltenbalg angeordnet ist.

Mit der erfindungsgemäßen Kolonne ist es möglich, bei Stillstand der die Rührorgane tragenden Welle und bei geschlossenen Einläufen und Abläufen durch Senken oder Heben der Scheiben der Rührorgane oder der Statorscheiben, welche gegebenenfalls zu einem Paket zusammengefügt sind, benachbarte Scheiben und Statorscheiben in eine solche Stellung zu bringen, daß der Kolonnenquerschnitt mehrere Male übereinander verschlossen wird. Dadurch entstehen in der Kolonne einzelne, voneinander getrennte Kammern. Diese Kammern können zwischen jeder Scheibe und Statorscheibe gebildet sein, müssen jedoch mindestens im Abstand einer theoretischen Stufe der Extraktionskolonne vorhanden sein.

Dadurch wird erreicht, daß bei Stillstand der Extraktionskolonne eine Entmischung der beiden flüssigen Phasen nur in den abgeschlossenen Kammern erfolgt und das beim Betrieb der Extraktionskolonne eingestellte Gleichgewicht in Bezug auf den Konzentrationsgradienten in Axialrichtung eingefroren wird. Daher entspricht der Extraktionsverlauf nach der Wiederinbetriebnahme der Kolonne praktisch dem vor ihrem Stillstand, so daß Fehlchargen bzw. Ausbeuteverluste vermieden werden.

Bei der Kolonne gemäß der Erfindung kann das Heben bzw. Senken der Welle bzw. der gegebenenfalls zu einem Paket vereinigten Statorscheiben mechanisch, hydraulisch oder pneumatisch erfolgen. Dabei muß die Hubstrecke dem vertikalen Abstand zwischen den Scheiben der Rührorgane und den Statorscheiben entsprechen.

In der beigefügten Zeichnung ist ein Ausführungsbeispiel des Gegenstandes der Erfindung schematisch und im Schnitt dargestellt. Dabei zeigen

Figur 1 eine Seitenansicht auf eine Extraktionskolonne mit höhenverstellbarem Rotor,

Figur 2 eine Seitenansicht auf eine Extraktionskolonne mit höhenverstellbarem Stator,

Figur 3, Figur 4, Figur 5 verschiedene Anordnungen von Leitblechen,

Figur 6a und 6b eine Ausführungsform der Abdichtung zwischen Rotor und Stator,

Figur 7a und 7b eine andere Ausführungsform der Abdichtung zwischen Rotor und Stator,

Figur 8a und 8b eine dritte Ausführungsform der Abdichtung zwischen Rotor und Stator.

Das Gehäuse 1 der Extraktionskolonne weist nahe seinem oberen Ende einen Einlauf 2 für die spezifisch schwerere Flüssigkeit und einen Ablauf 3 für die spezifisch leichtere Flüssigkeit auf, während sich nahe ihrem unteren Ende ein Ablauf 4 für die spezifisch schwerere Flüssigkeit und Einlauf 5 für die spezifisch leichtere Flüssigkeit befinden. Im Gehäuse 1 befindet sich ein Rotor, welcher aus einer zentrisch angeordneten Welle 6 besteht, auf der übereinander und mit Abstand voneinander Rührorgane 7 befestigt sind und die durch einen Motor 8 antreibbar ist.

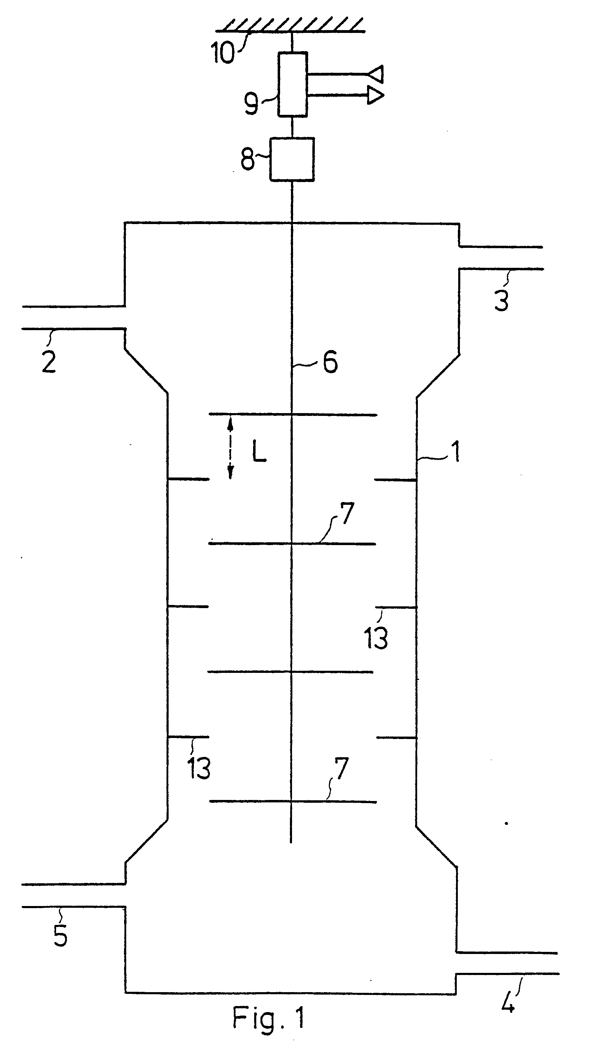

Nach Figur 1 sind an der Innenwand des Gehäuses 1 als Stator mehrere horizontal angeordnete Statorscheiben 13 mit Abstand übereinander befestigt. Weiterhin sind Welle 6 und Motor 8 an einem Hubzylinder 9 befestigt, welcher seinerseits an einer Decke 10 aufgehängt ist. Dabei sind bei Betätigung des Hubzylinders 9 die Rührorgane 7 um den Abstand L anhebbar bzw. absenkbar, so daß sie mit den Statorscheiben 13 schließend zusammenwirken.

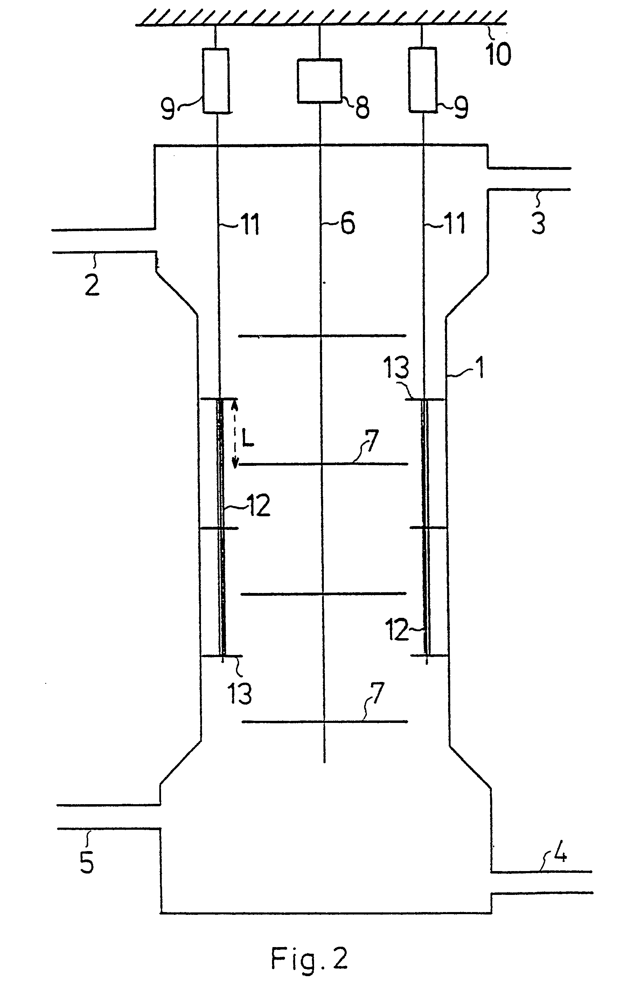

Nach Figur 2 sind die als Stator dienenden horizontal angeordneten Statorscheiben 13 senkrecht von Zugankern 11 durchdrungen, welche an an der Decke 10 aufgehängten Hubzylindern 9 befestigt sind. Über die Zuganker 11 sind im Bereich zwischen den Statorscheiben 13 Distanzhalter 12 übergeschoben. Dabei dürfen die Statorscheiben 13 zur Vermeidung der Rückvermischung nur eine minimale Randgängigkeit aufweisen. Die Welle 6 ist über den Motor 8 starr mit der Decke 10 verbunden. Bei Betätigung der Hubzylinder 9 sind die Statorscheiben 13 als Paket um den Abstand L anhebbar bzw. absenkbar, wodurch sie mit den Rührorganen 7 schließend zusammenwirken.

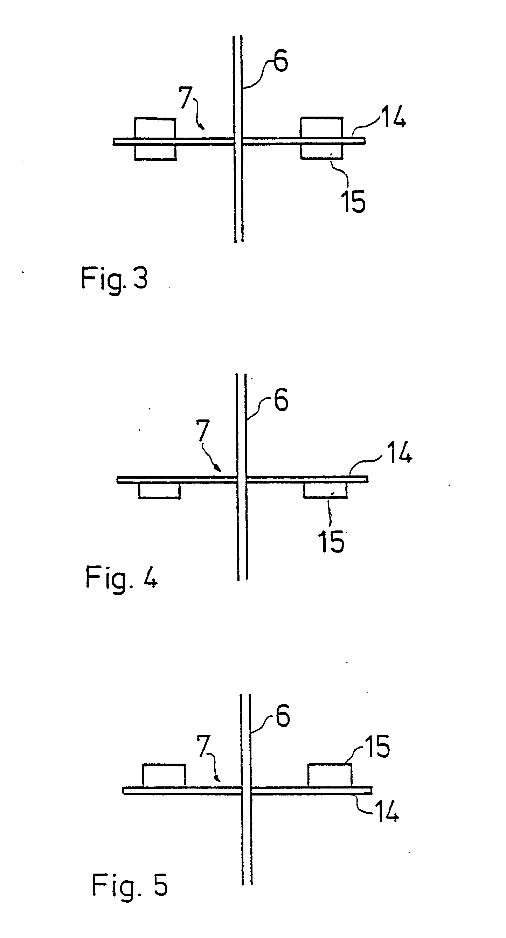

Die Rührorgane 7 umfassen mindestens an einer Stelle eine über ihren gesamten Durchmesser durchgehende Scheibe 14, deren Durchmesser mindestens so groß ist wie der Öffnungsdurchmesser der benachbarten Statorscheiben 13. Die zu den Rührorganen 7 zugehörigen Leitbleche 15 sind nach Figur 3 beidseitig der Scheibe 14 angeordnet, während sie nach Figur 4 unterhalb und nach Figur 5 oberhalb der Scheibe 14 angeordnet sind.

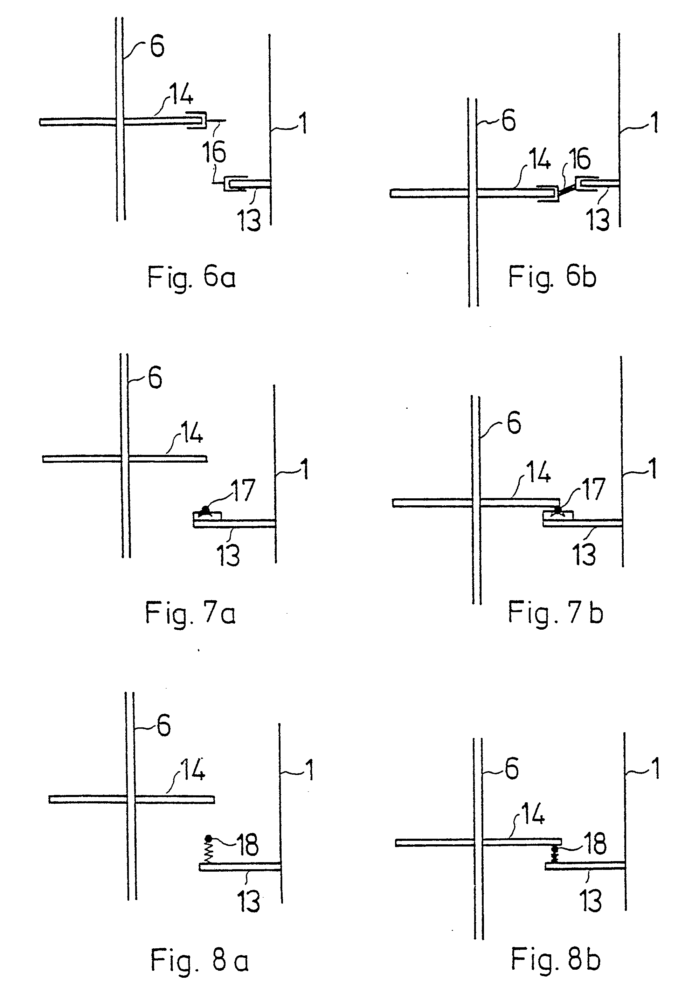

Nach den Figuren 6a und 6b ist die kreisförmige Berührungslinie zwischen Rotor und Stator elastisch gestaltet, indem die Scheiben 14 nach außen und die Statorscheiben 13 nach innen gerichtete Verlängerungen 16 aus elastischem Material aufweisen. Beim Absenken bzw. Anheben des Rotors bzw. des Stators überlappen sich beide elastischen Verlängerungen nach Art einer Lippendichtung und verschließen die verschiedenen Querschnitte der Extraktionskolonne dicht.

Nach den Figuren 7a und 7b weisen die Statorscheiben 13 an ihrer Oberseite je einen O-Ring 17 auf, wobei die verschiedenen Querschnitte der Extraktionskolonne beim Absenken der Scheiben 14 bzw. beim Anheben der Statorscheiben 13 durch ihre Auflage dicht verschlossen werden.

Nach den Figuren 8a und 8b ist auf der Oberseite jeder Statorscheibe 13 ein Faltenbalg 18 angeordnet, welcher beim Absenken der Scheiben 14 bzw. beim Anheben der Statorscheiben 13 zusammengedrückt wird. Dadurch sind die verschiedenen Querschnitte der Extraktionskolonne dicht verschlossen.

## Ansprüche

1. Mehrstufige Kolonne zur Gegenstromextraktion von zwei spezifisch verschieden schweren Flüssigkeiten mit einem vertikal stehenden Gehäuse, welches einen oberen Einlauf und einen unteren Auslauf für die spezifisch schwerere Flüssigkeit sowie einen unteren Einlauf und einen oberen Ablauf für die Spezifisch leichtere Flüssigkeit aufweist, wobei mittig im Gehäuse eine vertikal verlaufende Welle mit daran senkrecht mit Abstand voneinander befestigten Rührorganen angeordnet ist, und wobei sich im Bereich der Innenwand des Gehäuses mit Abstand übereinander mehrere kreisringförmige Statorscheiben befinden, und wobei die Rührorgane je eine über ihren gesamten Durchmesser durchgehende Scheibe umfassen, dadurch gekennzeichnet, daß die Rührorgane (7) und/oder die Statorscheiben (13) um einen Abstand L relativ zueinander vertikal verschiebbar angeordnet sind ; und daß zwischen jeder Scheibe (14) und jeder Statorscheibe (13) mindestens eine umlaufende Abdichteinrichtung vorgesehen ist.

2. Kolonne nach Anspruch 1, dadurch gekennzeichnet, daß die Statorscheiben (13) an der Innenwand des Gehäuses (1) befestigt sind und daß ein Hubzylinder (9) vorgesehen ist, durch welchen die die Rührorgane (7) tragende Welle (6) senkbar bzw. hebbar ist.

3. Kolonne nach Anspruch 1, dadurch gekennzeichnet, daß die die Rührorgane (7) tragende Welle (6) starr angeordnet ist und daß die Statorscheiben (13) tragende Zuganker (11) an Hubzylindern (9) aufgehängt sind, durch welche die Statorscheiben (13) senkbar bzw. hebbar sind.

4. Kolonne nach Anspruch 3, dadurch gekennzeichnet, daß im Bereich zwischen den Statorscheiben (13) Distanzhalter (12) über die Zuganker (11) übergezogen sind.

5. Kolonne nach einem der Ansprüche 1 bis 4, dadurch gekennzeichnet, daß die Scheiben (14) nach außen gerichtete und die Statorscheiben (13) nach innen gerichtete Verlängerungen (16) aus elastischem Material aufweisen.

6. Kolonne nach einem der Ansprüche 1 bis 4, dadurch gekennzeichnet, daß die Statorscheiben (13) an ihrer Oberseite oder Unterseite je einen O-Ring (17) aufweisen.

7. Kolonne nach einem der Ansprüche 1 bis 4, dadurch gekennzeichnet, daß auf der Oberseite oder Unterseite jeder Statorscheibe (13) ein Faltenbalg (18) angeordnet ist.

## Claims

1. Multistage column for countercurrent extraction of two liquids of different specific density, comprised of a housing in upright position provided with an upper inlet and lower outlet for the specifically denser liquid, and with a lower inlet and upper outlet for the specifically less dense liquid, wherein a shaft extending vertically downward and having stirring means spaced apart from each other is arranged centrally within the housing, wherein several annular stator collars arranged one above another and spaced apart from each other are secured to the inside wall of the housing, and wherein each of the stirring means is provided with a through-disk extending over its entire diameter, characterized in that the stirring means (7) and/or the stator disk (13) are displaceable vertically with respect to one another at a spacing L, and that at least one circumferential packing is disposed between each disk (14) and each stator disk (13).

2. Column as claimed in claim 1, wherein the stator disks (13) are secured to the inside wall of the housing (1), a lifting cylinder (9) permitting the shaft (6) supporting the stirring means (7) to be lowered of lifted.

3. Column as claimed in claim 1, wherein the shaft (6) supporting the stirring means (7) is disposed rigidly and tie rods (11) supporting the stator disks (13) are suspended from lifting cylinders (9) permitting the stator disks (13) to be lowered or lifted.

4. Column as claimed in claim 3, wherein spacers (12) are pulled over the tie rods (11) within the region of the stator disks (13).

5. Column as claimed in any of claims 1 to 4, wherein the disks (14) are formed with outwardly directed and the stator disks (13) are formed with inwardly directed extensions of elastic material.

6. Column as claimed in any of claims 1 to 4, wherein each of the stator collars (13) is formed at its upper of under side with an O-shaped ring (17).

7. Column as claimed in any of claims 1 to 4, wherein each of the stator collars (13) is formed at its upper or under side with a bellows (18).

## Revendications

1. Colonne à plusieurs étages pour l'extraction à contrecourant de deux liquides de masses volumiques différentes, comportant un corps vertical qui présente un raccord supérieur d'entrée et un raccord inférieur de sortie du liquide le plus lourd ainsi qu'un raccord inférieur d'entrée et un raccord supérieur de sortie du liquide le plus léger et un arbre vertical disposé au centre du corps et muni d'éléments agitateurs qui sont fixés perpendiculairement à l'arbre et espacés les uns des autres, plusieurs bagues de stator annulaires étant disposées à distance les unes au-dessus des autres dans la région de la paroi intérieure du corps et chaque élément agitateur comprenant un disque s'étendant sans solution de continuité sur tout le diamètre de l'élément, caractérisée en ce que les éléments agitateurs (7) et/ou les bagues de stator (13) sont déplaçables verticalement les uns par rapport aux autres sur une distance L ; et en ce qu'au moins un dispositif d'étanchéité circonférentiel est disposé entre chaque disque (14) et chaque bague de stator (13).

2. Colonne selon la revendication 1, caractérisée en ce que les bagues de stator (13) sont fixées sur la paroi intérieure du corps (1) et en ce qu'un vérin (9) permet d'abaisser ou de lever l'arbre (6) supportant les éléments agitateurs (7).

3. Colonne selon la revendication 1, caractérisée en ce que l'arbre (6) supportant les éléments agitateurs (7) est disposé fixe et en ce que des tirants (11) supportant les bagues de stator (13) sont suspendus à des vérins (9) permettant d'abaisser et de lever les bagues de stator (13).

4. Colonne selon la revendication 3, caractérisée en ce que, dans la région entre les bagues de stator (13), les tirants (11) sont entourés d'entretoises (12).

5. Colonne selon l'une quelconque des revendications 1 à 4, caractérisée en ce que les disques (14) et les bagues de stator (13) présentent des prolongements (16) en matériau élastique, orientés vers l'extérieur et l'intérieur, respectivement.

6. Colonne selon l'une quelconque des revendications 1 à 4, caractérisée selon l'une quelconque des revendications 1 à 4, caractérisée en ce que chaque bague de stator (13) présente à sa surface supérieure ou inférieure un joint torique (17).

7. Colonne selon l'une quelconque des revendications 1 à 4, caractérisée en ce qu'un soufflet (18) est monté sur la surface supérieure ou inférieure de chaque bague de stator (13).

Fig. 1

Fig. 2

Fig. 3

Fig. 4

Fig. 5

Fig. 6a

Fig. 6b

Fig. 7a

Fig. 7 b

Fig. 8 a

Fig. 8b